Europäisches Patentamt

European Patent Office

Office européen des brevets

(11) Publication number: **0 443 043 B1**

# EUROPEAN PATENT SPECIFICATION

(45) Date of publication of patent specification: **05.04.95**  (51) Int. Cl.[6]: **C08B 37/08**

(21) Application number: **90913540.2**

(22) Date of filing: **12.09.90**

(86) International application number:
**PCT/JP90/01168**

(87) International publication number:
**WO 91/04279 (04.04.91 91/08)**

The file contains technical information submitted
after the application was filed and not included in
this specification

(54) **PROCESS OF PRODUCTION OF LOW-MOLECULAR WEIGHT HYALURONIC ACID.**

(30) Priority: **12.09.89 JP 236731/89**

(43) Date of publication of application:
**28.08.91 Bulletin 91/35**

(45) Publication of the grant of the patent:
**05.04.95 Bulletin 95/14**

(84) Designated Contracting States:
**BE CH DE ES FR GB IT LI SE**

(56) References cited:
**EP-A- 0 138 572**
**EP-A- 0 216 453**
**EP-A- 0 239 335**
**FR-A- 2 521 569**

(73) Proprietor: **SHISEIDO COMPANY LIMITED**
**7-5-5, Ginza**
**Chuo-ku**
**Tokyo 104-10 (JP)**

(72) Inventor: **AKASAKA, Hidemichi Shiseido Laboratories**
**1050, Nippa-cho**
**Kohoku-ku**
**Yokohama-shi**
**Kanagawa 223 (JP)**
Inventor: **YAMAGUCHI, Toshijiro Shiseido**
**Laboratories**
**1050, Nippa-cho**
**Kohoku-ku**
**Yokohama-shi**
**Kanagawa 223 (JP)**

(74) Representative: **Brandes, Jürgen, Dr. rer. nat.**
**et al**
**Wuesthoff & Wuesthoff**
**Patent- und Rechtsanwälte**
**Schweigerstrasse 2**
**D-81541 München (DE)**

## Description

TECHNICAL FIELD

The present invention relates to a process for the production of low-molecular weight hyaluronic acid (hereinafter referred to as "HA"). More specifically, it relates to a process for the production of a low molecular hyaluronic acid which is stable against heat and which can be industrially produced in a large production scale. Further the invention relates to an eye drop and a cosmetic composition.

BACKGROUND ART

HA is produced by extracts from rooster combs, umbilical cord, skin, synovial fluid, and other biological tissues or by the fermentation method using bacteria of genus Streptococcus and is used for cosmetics and pharmaceuticals. Heretofore, in this field, high molecular weight HA has been mainly used due to the fact that the higher the molecular weight and viscosity of the HA, the more noticeable the effect. However, high-molecular weight HA has many problems in the application thereof. For example, high molecular weight HA is poor in heat stability and is required to storage at low temperatures. Furthermore, HA cannot be heat sterilized. This has limited the development of applications of HA.

On the other hand, it has been found that low-molecular HA differs from the high-molecular HA in that it easily dissolves in water and is low in viscosity. Accordingly, there are such advantageous effect that cosmetics including it do not give an unpleasant feeling such as stickiness to the skin or stinginess. Thus, the use of low-molecular HA as a cosmetic material has been expected. Further, low molecular HA has a healing effect on wounds and, therefore, is considered applicable as, for example, eye drops, skin ointments, anti-adhesion agents.

It has been heretofore known to obtain low-molecular HA by treating high-molecular weight HA (for example, an average molecular weight of 700,000 or more) by hyaluronidase and also heat, strong acid, strong alkali, and other chemical methods (Japanese Unexamined Patent Publication (Kokai) No. 62-79790 and Japanese Unexamined Patent Publication (Kokai) No. 63-57602). FR-A-2521569 describes depolymerization of polysaccharides having a rope-like helix structure.

However, the conventional processes for production of low-molecular HA have suffered from difficulties in control of the degree of decomposition and have given various molecular weight of hyaluronic acids, in addition to the HA of the desired molecular weight, and, as a result, an extremely broad distribution of molecular weights of the HA (in other words, an uneven molecular weight of the hyaluronic acid) is produced. Further, it is difficult to remove the hyaluronidase, acid, or alkali added for the treatment, and also there are problems such as a low yield. In addition, research on the heat stability of the resultant low-molecular weight HA has not yet been done.

DISCLOSURE OF INVENTION

Accordingly, the objects of the present invention are to eliminate the above-mentioned disadvantages of the prior art and to provide a process for producing a low-molecular weight hyaluronic acid having a viscosity average molecular weight of 500,000 or less and having a narrow molecular weight distribution at a high production yield.

Other objects and advantages of the present invention will be apparent from the following description.

In accordance with the present invention, there is provided a process for producing hyaluronic acid having a viscosity average molecular weight of 15,000 to 500,000 and having a molecular weight distribution of 1.7 or less in terms of Mw/Mn by mechanically degradating an aqueous solution of a hyaluronic acid having a viscosity average molecular weight of 700,000 or more by a shear treatment at a temperature of from room temperature to 100°C and at a shear rate of 1 N/cm$^2$ (10$^5$ dyne/cm$^2$) or more.

BRIEF DESCRIPTION OF DRAWINGS

The present invention will be better understood from the description set forth below with reference to the accompanying drawings, in which:

Figure 1 shows the relation between the times of treatment of high-molecular weight HA by a MANTONGAULIN and the resultant molecular weight;

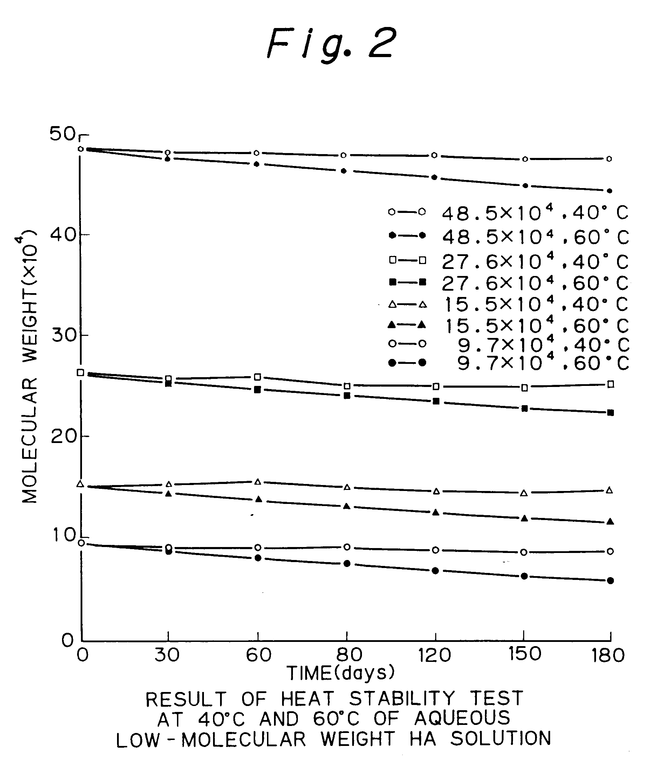

Fig. 2 shows the results of a heat stability test at 40°C and 60°C of an aqueous low-molecular weight HA solution;

Fig. 3 shows the results of a heat stability test at 40°C and 60°C of an aqueous high-molecular weight HA solution; and

Fig. 4 shows the gel filtration chromatogram of low-molecular weight HA by Sephacryl S-1000.

BEST MODE FOR CARRYING OUT THE INVENTION

According to the present invention, the low-molecular weight HA having an average molecular weight of 500,000 or less, preferably 15,000 to 500,000 can be obtained by mechanically treating high-molecular weight HA (average molecular weight of 700,000 or more, preferably 700,000 to 2,500,000) by a shear treatment. The resultant low-molecular weight HA has an extremely narrow distribution of molecular weights (i.e., gives a substantially uniform molecular weight) and further is stable with respect to heat.

The molecular weight distribution of the low-molecular weight HA produced according to the present invention is 1.7 or less using the Mw/Mn ratio as the index of the molecular weight distribution (Mw: weight average molecular weight, Mn: number average molecular weight).

In the present invention, the mechanical shear treatment is used for the method of degradating or depolymerizing high-molecular weight HA to a low-molecular weight. This shear treatment under a high shear rate gives HA of on extremely narrow molecular weight distribution, a substantially uniform molecular weight, compared with treatment by conventional chemical methods (e.g., ultraviolet rays, electron beams, free radicals, alkali, acid, heat, enzymes). Further, there is no need for removal of, for example, hyaluronidase, acid, or alkali, which is considered difficult in the past, and also the yield is high and a large scale industrial production can be carried out.

The shear treatment under a high shearing force or a high shear rate according to the present invention means the share rate is 1 N/cm$^2$ (10$^5$ dyne/cm$^2$) or more.

The shear treatment by a high shearing force according to the present invention can be effected by an emulsifier capable of applying a stronger shear than the mixers usually used for emulsification (e.g., homomixers, Disper mixers, propeller agitators). Examples of such emulsifiers are a MANTONGAULIN, French press, microfluidizer, colloid mill.

In the treatment using a shearing force of the present invention, the higher the pressure applied to the HA solution or the smaller the sectional area of the small spaces for passage, the higher the shear force created. In general, however, since the flow rate of the solution passing through the small spaces is large, the reduction in the molecular weight by a single treatment is insufficient and, therefore, it is desirable that the same operation be repeated or that multiple stage apparatuses is used to reduce the molecular weight to the desired level.

The starting HA used in the present invention may be any commercially available fowl tumor derived HA, microorganism derived HA, or relatively uniform high molecular weight HA obtained by cultivating HA producing bacteria under strictly controlled conditions and harvesting the same, so long as it is an HA of a high molecular weight or a relatively high molecular weight (for example, an average molecular weight of 700,000 or more, preferably 700,000 to 2,500,000).

The production of HA according to the present invention is performed in an aqueous solution state. The concentration of HA in the solution is not particularly limited, but usually up to 2% by weight is preferable. When the concentration is more than 2% by weight, the viscosity becomes large and handling becomes inconvenient, which is not preferable from the viewpoint of commercialization.

In the present invention, the temperature of the solution during the shear treatment of HA has a large effect on the effect of the degradation to a low molecular weight. However, when a temperature is too high, a browning reaction and the like may occur and, therefore, the temperature is usually selected to be from room temperature to 100°C.

The starting HA is dissolved in water or a suitable saline solution and when degradated to the desired average molecular weight, separation and purification are performed by the usual, known operations such as organic solvent fractionation, salting out, dialysis, ultrafiltration, whereby it is possible to obtain HA having a narrow distribution of molecular weights with any average molecular weight below 500,000 and stable with respect to heat.

The low-molecular weight HA according to the present invention obtained in this way has in itself a wound curing effect, and, therefore, can be applied to eye drops, skin ointment, anti-adhesion agents, and other pharmaceuticals and cosmetics.

The HA obtained according to the present invention has an extremely narrow distribution of molecular weight and a substantially uniform molecular weight. Further, it is superior in heat stability. Further, there is no need for removal of the hyaluronidase, acid, or alkali, which is considered difficult in the conventional chemical methods, the yield is high, and a large scale industrial production can be carried out.

EXAMPLES

The present invention will now be further illustrated by, but is by no means limited to, the following Examples.

Example 1

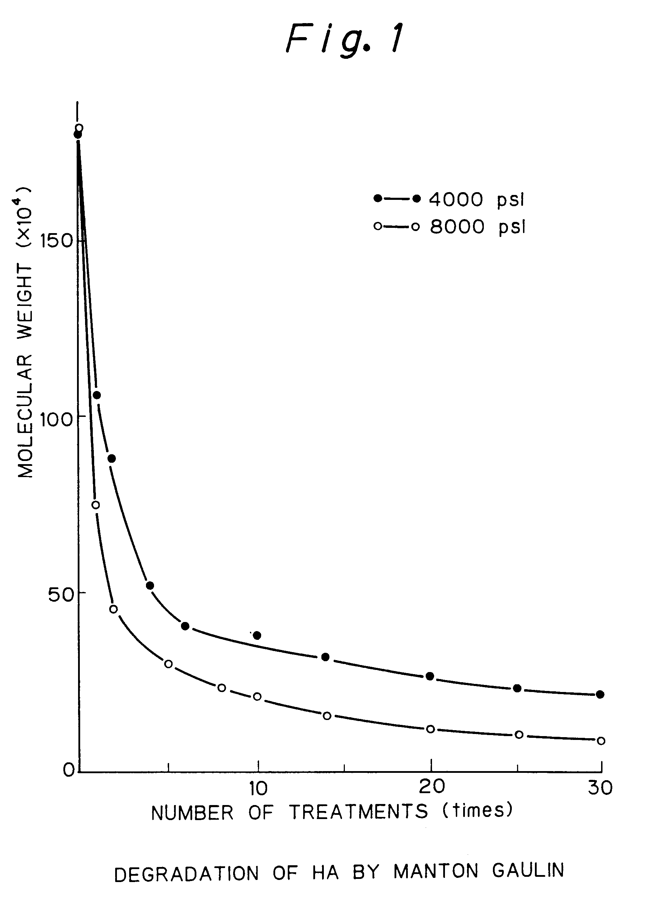

HA having a viscosity average molecular weight of 1,800,000 was dissolved in water to prepare two liters of a 0.3% by weight aqueous solution. This aqueous solution was degradated into low molecular form by a MANTONGAULIN of APV Gaulin Co. The pressure was set to 55160 kPa (8,000 psi) for 5 minutes and 27580 kPa (4,000 psi) for 10 minutes and the treatment was repeated under the same conditions to find the relationship between the number of treatments and the molecular weight. The results are shown in Fig. 1. The molecular weight was calculated by measuring the intrinsic viscosity $[\eta]$ and the formula of Laurent $\eta = 36 \times Mw^{0.78} \times 10^{-5}$ (wherein Mw is a weight average molecular weight). As a result, for example, with 30 treatments 55160 kPa (8,000 psi), it was possible to produce HA having any average molecular weight up to a molecular weight of 500,000 or less.

Example 2

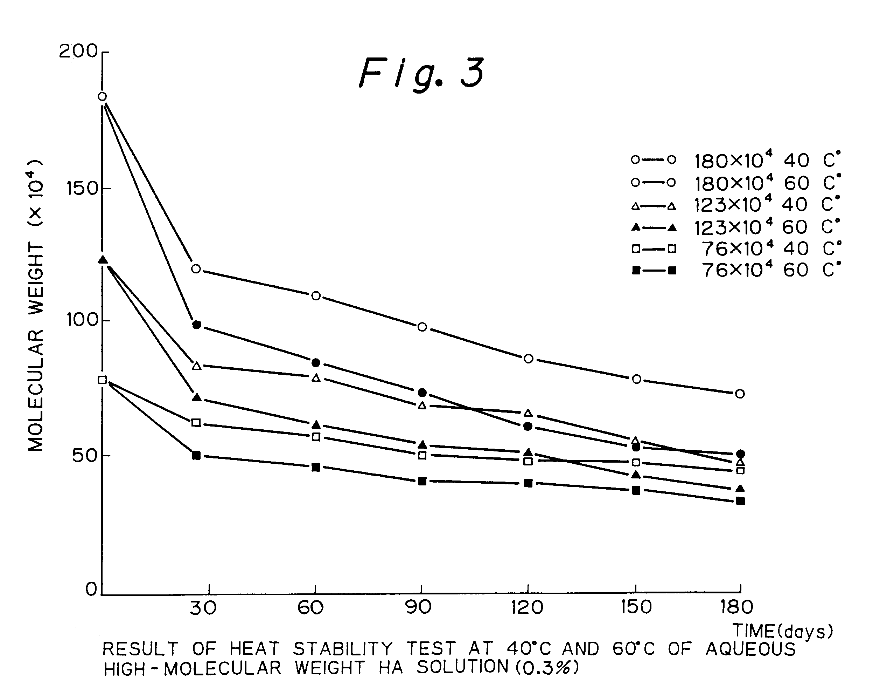

A heat stability test was performed at 40°C and 60°C for a 0.1% by weight aqueous solution of the low molecular HA obtained in Example 1. The results are shown in Fig. 1. HA's having an average molecular weight of 97,000, 155,000, 276,000, and 485,000 were stable for over six months. HA with an average molecular weight of over 1,800,000 (i.e., Comparative Example, Fig. 3), however, clearly fell in molecular weight.

Example 3

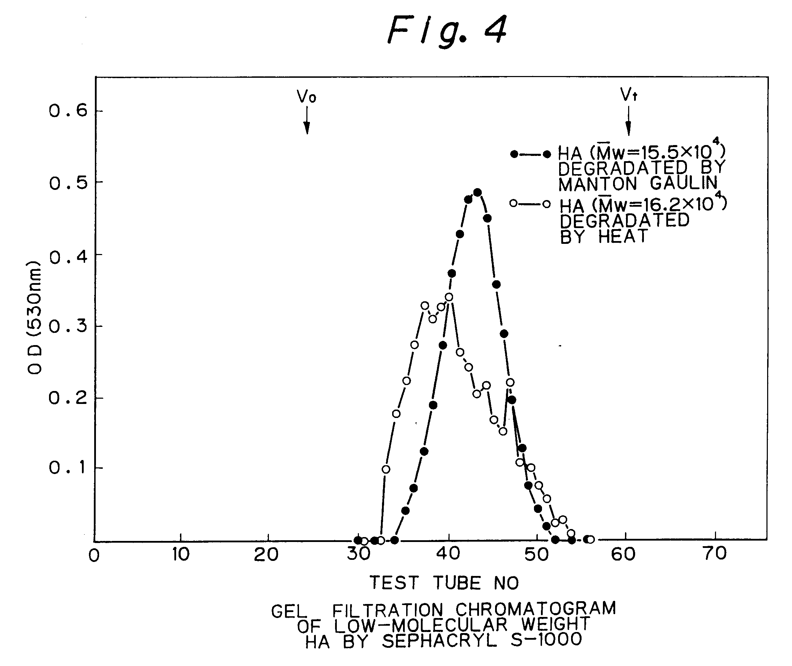

The Sephacryl S-1000 chromatograms of HA having an average molecular weight of 155,000 obtained in Example 1 and HA having an average molecular weight of 162,000 obtained by heat decomposition (Comparative Example) are shown in Fig. 4.

As clear from the figures, the HA obtained by degradation to low molecular form by the shear treatment had a narrower distribution of molecular weight and more uniform molecular weight compared with HA obtained by heat treatment.

Claims

1. A process for producing hyaluronic acid having a viscosity average molecular weight of 15,000 to 500,000 and having a molecular weight distribution of 1.7 or less in terms of Mw/Mn by mechanically degradating an aqueous solution of a hyaluronic acid having a viscosity average molecular weight of 700,000 or more by a shear treatment at a temperature of from room temperature to 100°C and at a shear rate of 1 N/cm² ($10^5$ dyne/cm²) or more.

2. A process as claimed in claim 1, wherein the hyaluronic acid to be degradated is a microorganism derived hyaluronic acid.

3. An eye drop comprising the hyaluronic acid obtained by the process according to claim 1.

4. A cosmetic composition comprising the hyaluronic acid obtained by the process according to claim 1.

Patentansprüche

1. Verfahren zur Herstellung von Hyaluronsäure mit einem Viskositäts-mittleren Molekulargewicht von 15000 bis 500000 und einer Molekulargewichtsverteilung von 1,7 oder weniger, ausgedrückt in Mw/Mn durch mechanischen Abbau einer wäßrigen Lösung einer Hyaluronsäure mit einem Viskositätsmittleren Molekulargewicht von 700000 oder darüber durch eine Scherbehandlung bei einer Temperatur von Raumtemperatur bis 100°C und bei einem Schergrad von 1 N/cm² ($10^5$ Dyn/cm²) oder mehr.

2. Verfahren nach Anspruch 1, bei dem die abzubauende Hyaluronsäure eine Hyaluronsäure ist, die sich von einem Mikroorganismus ableitet.

3. Augentropfen mit der Hyaluronsäure, erhalten nach dem Verfahren gemäß Anspruch 1.

4. Kosmetische Zusammensetzung mit der Hyaluronsäure, erhalten nach dem Verfahren gemäß Anspruch 1.

Revendications

1. Un procédé de préparation d'acide hyaluronique présentant en viscosité un poids moléculaire moyen de 15 000 à 500 000 et présentant une distribution de poids moléculaire de 1,7 ou moins, exprimée par le rapport Mw/Mn (Mw = poids moléculaire moyen en masse; Mn = poids moléculaire moyen en nombre) par dégradation mécanique d'une solution aqueuse d'un acide hyaluronique présentant une masse moléculaire moyenne par viscosité de 700 000 ou davantage, au moyen d'un traitement de cisaillement à une température comprise entre la température ambiante et 100°C et à une force de cisaillement de 1 N/cm² ($10^5$ dyne/cm²) ou davantage.

2. Un procédé selon la revendication 1, dans lequel l'acide hyaluronique dégradé est un acide hyaluronique dérivé d'un micro-organisme.

3. Un collyre renfermant un acide hyaluronique obtenu selon le procédé de la revendication 1.

4. Une composition cosmétique renfermant un acide hyaluronique obtenu par un procédé selon la revendication 1.

# Fig. 1

DEGRADATION OF HA BY MANTON GAULIN

# Fig. 2

RESULT OF HEAT STABILITY TEST
AT 40°C AND 60°C OF AQUEOUS
LOW-MOLECULAR WEIGHT HA SOLUTION

Fig. 3

MOLECULAR WEIGHT (×10⁴)

200

150

100

50

0

30 60 90 120 150 180

TIME(days)

| | | |
|---|---|---|
| ○ | 180×10⁴ | 40 C° |
| ● | 180×10⁴ | 60 C° |
| △ | 123×10⁴ | 40 C° |
| ▲ | 123×10⁴ | 60 C° |
| □ | 76×10⁴ | 40 C° |
| ■ | 76×10⁴ | 60 C° |

RESULT OF HEAT STABILITY TEST AT 40°C AND 60°C OF AQUEOUS
HIGH-MOLECULAR WEIGHT HA SOLUTION (0.3%)

8

Fig. 4

GEL FILTRATION CHROMATOGRAM
OF LOW-MOLECULAR WEIGHT
HA BY SEPHACRYL S-1000